# EUROPÄISCHE PATENTSCHRIFT

(11) **EP 1 741 494 B1**
(45) Veröffentlichungstag und Bekanntmachung des Hinweises auf die Patenterteilung: **05.01.2011**
(21) Anmeldenummer: 05014638.0
(22) Anmeldetag: 06.07.2005
(51) Int. Cl.: B05D 7/00, B05D 7/02, F16L 11/04, B05C 19/00

(54) **Verfahren zum Herstellen eines Schlauches, insbesondere eines Brauseschlauches aus mehreren Schichten**
Process for making a hose, especially a shower hose, with several layers
Procédé de fabrication d'un tuyau, particulièrement un tuyau de douche, avec plusieurs couches

(43) Veröffentlichungstag der Anmeldung: 10.01.2007
(73) Patentinhaber: Ramspott GmbH & Co. KG, 59909 Bestwig (DE)
(72) Erfinder: Ramspott Heiner, 59909 Bestwig (DE)
(74) Vertreter: Graefe, Jörg

(56) Entgegenhaltungen:
- DE-A1- 19 511 216
- US-A- 3 508 946

## Beschreibung

Die Erfindung betrifft ein Verfahren zum Herstellen eines Schlauches, insbesondere eines Brauseschlauchs aus mehreren Schichten, eine Vorrichtung zum Herstellen des Schlauchs und einen Schlauch.

Aus der Druckschrift mit der Veröffentlichungsnummer DE 195 11 216 C2 ist ein Brauseschlauch bekannt, der mehrere Schichten aufweist. Die eine Schicht wird durch einen so genannten Innenschlauch gebildet, während eine äußere Schicht durch einen so genannten Außenschlauch gebildet wird. Zwischen dem Innenschlauch und dem Außenschlauch ist eine Einfärbung vorgesehen. Die Einfärbung wird durch ein Farbpulver beispielsweise mit Metallpigmenten bzw. -, partikeln hervorgerufen. Die Partikel sind in einem Zwischenbereich zwischen dem Innenschlauch und dem Außenschlauch eingefüllt.

Zur Herstellung eines derartigen Schlauchs wird der Innenschlauch von oben durch einen Trichter gezogen, in welchem die Farbpigmente angeordnet sind. Unterhalb des Trichters ist eine Ringdüse angeordnet, welche den Außenschlauch aufträgt. Dabei ist die Ringdüse zu dem Trichter so angeordnet, dass geringfügige Mengen der Farbpigmente während des Auftragens des Außenschlauchs in den Zwischenraum zwischen dem Innenschlauch und dem Außenschlauch eindringen. Das Auftragen der Farbpigmente auf die Oberfläche des Innenschlauchs und das Aufextrudieren des Außenschlauchs erfolgt gewissermaßen in einem Arbeitsschritt.

Zwar kann mit dem in der Druckschrift beschriebenen Verfahren ein Brauseschlauch schnell hergestellt werden, das Ergebnis ist aus ästhetischen Gründen jedoch nicht immer befriedigend. So wirkt die Einfärbung des Brauseschlauchs oft sehr grobkörnig, auch wenn Farbpigmente mit sehr kleinem Durchmesser verwendet werden.

Gewünscht wird jedoch häufig eine Einfärbung die möglichst feinkörnig und gleichmäßig erscheint. Mit dem in der Druckschrift beschriebenen Herstellungsverfahren und der dort angedeuteten Vorrichtung zur Herstellung eines solchen Brauseschlauchs ist eine feinkörnige und möglichst gleichmäßige glatte Einfärbung nicht herstellbar.

Hier setzt die vorliegende Erfindung an.

Der Erfindung liegt die Aufgabe zugrunde, ein Verfahren, eine Vorrichtung zur Herstellung eines Schlauchs und einen Schlauch vorzuschlagen, bei dem die Einfärbung durch Farbpigmente beziehungsweise Partikel erfolgt, die pulverförmig auf den Innenschlauch aufgetragen werden, wobei die Einfärbung möglichst feinkörnig und gleichmäßig glatt sein soll.

Diese Aufgabe wird durch das erfindungsgemäße Verfahren nach Anspruch 1, durch eine erfindungsgemäße Vorrichtung nach Anspruch 11 und durch einen Schlauch nach Anspruch 24 gelöst.

Das erfindungsgemäße Verfahren nach Anspruch 1 unterscheidet sich von dem aus der Druckschrift DE 195 11 216 C2 bekannten Herstellungsverfahren im Wesentlichen dadurch, dass der Schlauch in drei Schritten hergestellt wird. Zunächst wird in einem ersten Schritt auf eine äußere Oberfläche eines Innenschlauches, der eine innere Schicht des Schlauchs bildet, Partikel aufgetragen. Nach dem Auftragen der Partikel wird in einem zweiten Schritt durch Bürsten, Rollen, Lappen oder dergleichen mechanisch auf die an dem Innenschlauch anhaftenden Partikel eingewirkt. Nach der mechanischen Einwirkung auf die Partikel wird dann erst in einem dritten Schritt die äußere Schicht aufgetragen.

Das erfindungsgemäße Verfahren ist im Grunde durch den zusätzlichen Schritt, in dem durch Bürsten, Rollen, Lappen oder dergleichen mechanisch auf die an dem Innenschlauch anhaftenden Partikel eingewirkt wird, aufwändiger. Das Ergebnis dieses Herstellungsverfahrens rechtfertigt jedoch diesen zusätzlichen Aufwand. Die Einfärbung des Brauseschlauchs ist feinkörniger und gleichmäßiger glatt, selbst wenn vergleichsweise große Partikel verwendet werden. Durch das erfindungsgemäße Verfahren ist es beispielsweise möglich, größere Partikel zu verwenden als bei dem Verfahren, wie es aus der Druckschrift DE 195 11 216 C2 der Fall ist. Da sich größere Partikel z. T. leichter verarbeiten lassen und auch im Einkauf preisgünstiger sind, werden die Nachteile durch den zusätzlichen Aufwand des erfindungsgemäßen Verfahrens aufgewogen. Ein weiterer Vorteil größerer Partikel ist, dass die mit diesen größeren Partikeln hergestellten Oberflächen mehr glänzen als die mit kleineren Partikeln hergestellten Oberflächen. Durch das mechanische Einwirken auf die an dem Innenschlauch anhaftenden Partikel ist es sogar möglich, die Partikelmenge, die zum Einfärben des Brauseschlauchs notwendig ist, zu reduzieren. Der Partikelverbrauch zum Einfärben des Schlauchs ist daher geringer als nach dem Verfahren, das aus der Druckschrift DE 195 11 216 C2 bekannt ist.

Die Partikel könne aus einer aluminiumbedampften Folie hergestellt sein.

Der andere ästhetische Eindruck, nämlich die gleichmäßigere, glattere und feinkörnigere Einfärbung des Brauseschlauchs ist unmittelbar mit der mechanischen Einwirkung auf die an dem Innenschlauch anhaftenden Partikel verknüpft. Die zum Einfärben oft verwendeten Partikel haben oft die Form von mikroskopisch kleinen Plättchen. Werden diese Partikel nach dem in der genannten Druckschrift offenbarten Verfahren aufgebracht, sind diese Plättchen ungeordnet zwischen dem Innenschlauch und dem Außenschlauch eingefüllt. Die Plättchen sind in alle möglichen Richtungen ausgerichtet. Zum Teil stehen sie senkrecht zu der Oberfläche des Innenschlauchs, zum Teil liegen sie parallel an der Oberfläche des Innenschlauchs an. Dazwischen ist jede beliebige Winkelstellung der Plättchen zum Innenschlauch möglich. Durch das mechanische Einwirken auf die an dem Innenschlauch anhaftenden Partikel werden diese Partikel ausgerichtet. Die Partikel liegen dann im Wesentlichen parallel zur Oberfläche des Innenschlauchs. Dadurch entsteht der insgesamt gleichmäßigere, glattere und feinkörnigere Eindruck des nach dem erfindungsgemäßen Herstellungsverfahren hergestellten Brauseschlauchs.

Bei einem erfindungsgemäßen Verfahren kann vor dem Auftragen der Partikel die Oberfläche des Innenschlauchs mit einer Heizung aufgeheizt werden. Die Oberfläche kann dabei auf eine für das Material des Innenschlauchs typische Temperatur erhitzt werden, bei welcher die Oberfläche des Schlauchs viskos oder plastisch verformbar wird. Ebenso ist es möglich, dass auf die Oberfläche des Innenschlauchs vor dem Auftragen der Partikel ein Klebstoff oder ähnlichem aufgetragen wird. Bei einem Klebstoff kann jedoch die Gefahr bestehen, dass dieser nach dem Auftrag der Partikel, insbesondere während des mechanischen Einwirkens, verklumpt.

Vorzugsweise wird der Innenschlauch zum Auftragen der Partikel durch ein Bad mit den Partikeln gezogen. Ebenso ist es möglich, dass die Partikel auf die Oberfläche des Innenschlauchs aufgesprüht beziehungsweise aufgeblasen werden.

Nach dem Auftragen der Partikel findet das mechanische Einwirken auf die an dem Innenschlauch anhaftenden Partikel statt. Das mechanische Einwirken kann beispielsweise durch ein Druckmedium zum Beispiel durch Druckluft erfolgen. Der Innenschlauch mit den daran anhaftenden Partikeln kann dazu von dem Druckmedium angeströmt werden. Alternativ oder zusätzlich kann durch Bürsten, Rollen, Lappen oder dergleichen auf die Partikel eingewirkt werden.

Durch die mechanische Einwirkung können z. B. nicht unmittelbar an dem Innenschlauch anhaftende Partikel zum Teil entfernt werden. Damit ist es möglich, den Verbrauch der Partikel pro Längeneinheit des Schlauches zu reduzieren.

Auf den Schlauch kann im Grunde beliebig oft mechanisch eingewirkt werden. Ein mechanisches Einwirken ist insbesondere immer dann empfehlenswert, wenn der mit den Partikeln versehene Innenschlauch Kontakt mit einem anderen Gegenstand, zum Beispiel einer Umlenkrolle hatte.

Gemäß der Erfindung ist es möglich, dass nach dem Erhitzen der Oberfläche des Innenschlauchs und vor oder nach dem Auftragen der Partikel, insbesondere vor oder nach dem mechanischen Einwirken, mit einem oder mehreren Stempeln Vertiefungen in die Oberfläche des Innenschlauchs eingedrückt werden.

Eine erfindungsgemäße Vorrichtung zum Herstellen eines Schlauches, insbesondere eines Brauseschlauchs, mit der vorzugsweise das vorgenannte Verfahren durchgeführt werden kann, umfasst einen Behälter für ein Bad aus Partikeln, durch welches ein Innenschlauch gezogen werden kann. Der Behälter hat dazu eine Eintrittsöffnung und eine Austrittsöffnung aus dem dann der mit dem Partikel versehene Innenschlauch austreten kann. Der Behälter kann rotieren und/oder durch einen Vibrator in Schwingungen versetzt werden. Bei dem Behälter kann es sich um einen schräg stehenden Zylinder handeln, der von dem Innenschlauch in Längsrichtung durchlaufen wird. Zusätzlich weist die erfindungsgemäße Vorrichtung Mittel zum mechanischen Einwirken auf die an dem Innenschlauch anhaftenden Partikel auf. Die Mittel zur mechanischen Einwirkung auf die an dem Innenschlauch anhaftenden Partikel können Düsen für ein Druckmedium, insbesondere Druckluft umfassen, welche auf den Innenschlauch gerichtet sind, so dass das Druckmedium den Innenschlauch anströmen kann. Die erfindungsgemäße Vorrichtung kann alternativ oder zusätzlich weitere Mittel zur mechanischen Einwirkung umfassen. Diese können beispielsweise Bürsten, Rollen, Lappen oder dergleichen umfassen. Die Mittel zur mechanischen Einwirkung können zumindest teilweise aus Textilien, Leder, Schaumstoff, weichen Kunststoffmaterialien, Elastomeren, Borsten oder Ähnlichem hergestellt sein. Das mechanische Einwirken kann z. B. ein Polieren sein.

Es ist beispielsweise möglich, dass ein Mittel zur mechanischen Einwirkung eine Spiralbürste ist, durch welche der Innenschlauch gezogen wird. Eine solche Spiralbürste kann mittels eines Antriebs um ihre Längsachse in Rotation versetzt werden, wodurch bei gleichzeitigem Durchziehen des Innenschlauchs sowohl tangential als auch in Längsrichtung auf die Oberfläche des Innenschlauchs und somit auf die an dem Innenschlauch anhaftenden Partikel eingewirkt wird.

Die Düsen können bei einer erfindungsgemäßen Vorrichtung in Transportrichtung des mit den Partikeln versehenen Innenschlauchs hinter der rotierenden Bürste angeordnet sein.

Vorzugsweise sind die Mittel zur mechanischen Einwirkung in einem Gehäuse angeordnet. Das Gehäuse kann eine Eintrittsöffnung und eine Austrittsöffnung für den mit den Partikeln beschichteten Schlauch haben. Die Eintrittsöffnung des Gehäuses ist vorzugsweise mittelbar mit der Austrittsöffnung des Behälters verbunden. Die Verbindung kann beispielsweise durch eine Manschette hergestellt sein. In eine Wand des Gehäuses kann ein Filter eingesetzt sein, über den ein Druckausgleich hergestellt werden kann, der wegen des auf den Innenschlauch einwirkenden Druckmediums notwendig ist. Durch das Filter kann das Druckmedium entweichen, während die eventuell von dem Druckmedium mitgeführten Partikel in dem Filter haften bleiben und einer weiteren Verwendung zugeführt werden können. Der Filter ist dazu vorzugsweise oberhalb des Behälters für das Partikelbad angeordnet, so dass die zurückgehaltenen Partikel in den Behälter fallen können.

Die erfindungsgemäße Vorrichtung kann einen Behälter aufweisen, der zumindest in einem Abschnitt trichterförmig ausgebildet ist. Eine Spitze des Trichters ist dabei vorzugsweise gegen die Transportrichtung des Schlauchs gerichtet und an der Spitze ist die Eintrittsöffnung des Behälters für den Schlauch vorgesehen.
Ein nach dem erfindungsgemäßen Verfahren hergestellter Schlauch aber auch ein anderer Schlauch mit einer inneren Schicht und einer äußeren Schicht kann so ausgestaltet sein, dass in einer äußeren Oberfläche der inneren Schicht Vertiefungen vorgesehen sind. Diese Vertiefungen können Einprägungen sein, die beispielsweise durch einen oder mehrere Stempel hervorgerufen worden sind. Die Vertiefungen können vorzugsweise regelmäßig angeordnet sein und ein Muster bilden. Die Vertiefungen können insbesondere kreisförmig, ringförmig, tropfenförmig, linienförmig, pfeilförmig, kreuzförmig, quadratisch, rechteckig, symbolartig und/oder als Buchstaben bzw. Ziffern ausgebildet sein.

Ein erfindungsgemäßer Schlauch aber auch ein anderer Schlauch kann vorzugsweise so extrudiert sein, dass er einen nicht-kreisförmigen, z. B. einen sternförmigen, eckigen oder ovalen, Querschnitt hat. Ein derartiger Schlauch kann beispielsweise als Innenschlauch bzw. als einen die innere Schicht eines mehrschichtigen Schlauchs bildender Schlauch vorgesehen sein, wobei die äußere Schicht im Querschnitt einen kreisförmigen äußeren Rand haben kann.

Eine erfindungsgemäße Vorrichtung zum Herstellen eines erfindungsgemäßen Schlauchs und ein erfindungsgemäßer Schlauch sind anhand der Zeichnung näher erläutert. Es zeigen
- Fig. 1: eine Frontansicht der erfindungsgemäßen Vorrichtung mit abgenommener Frontwand,
- Fig. 2: eine perspektivische Darstellung eines Hauptteils der erfindungsgemäßen Vorrichtung,
- Fig. 3: eine Rückansicht des Hauptteils gemäß Fig. 2,
- Fig. 4: einen Schnitt durch den Hauptteil der Vorrichtung gemäß der Linie IV. in Fig. 3 und
- Fig. 5: einen Schnitt durch einen erfindungsgemäßen Schlauch.

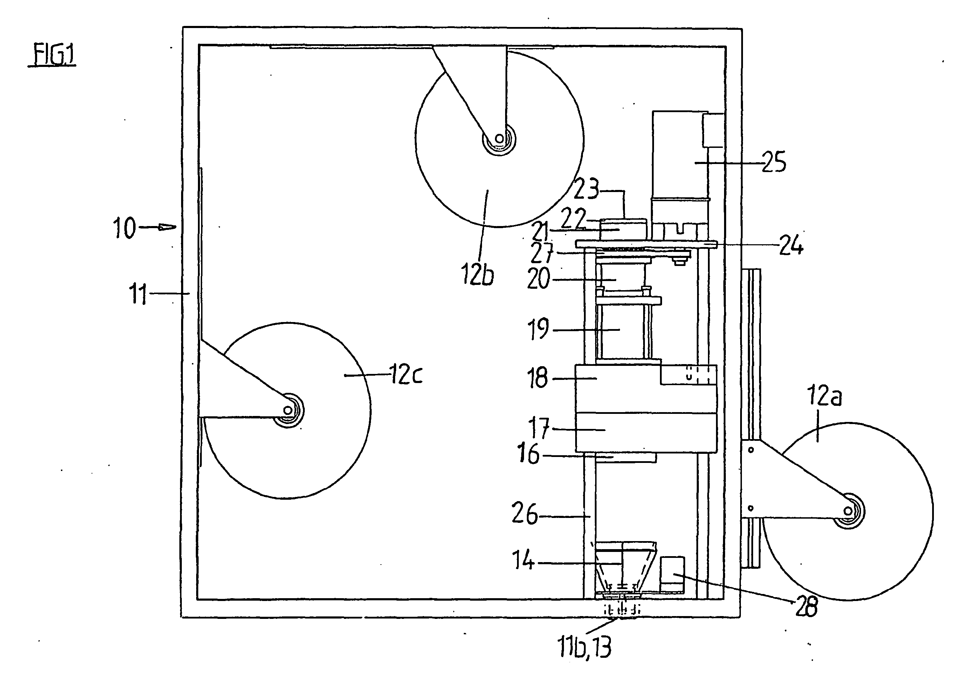

Erfindungsgemäße Vorrichtung gemäß den Figuren 1 bis 4 weist ein äußeres Gehäuse 11 mit einem Gehäuseboden 11a auf. In dieses Gehäuse 11 kann der zu verarbeitende Innenschlauch über eine Eintrittsöffnung 11b eingeführt werden. Über eine nicht dargestellte Austrittsöffnung kann der fertige Schlauch dann aus dem Gehäuse herausgeführt werden.

Auf der Außenseite des Gehäuses und innerhalb des Gehäuses sind mehrere Umlenkrollen 12a, 12 b, 12c angeordnet, über welche der zu verarbeitende Innenschlauch bzw. der beschichtete Innenschlauch geführt wird.

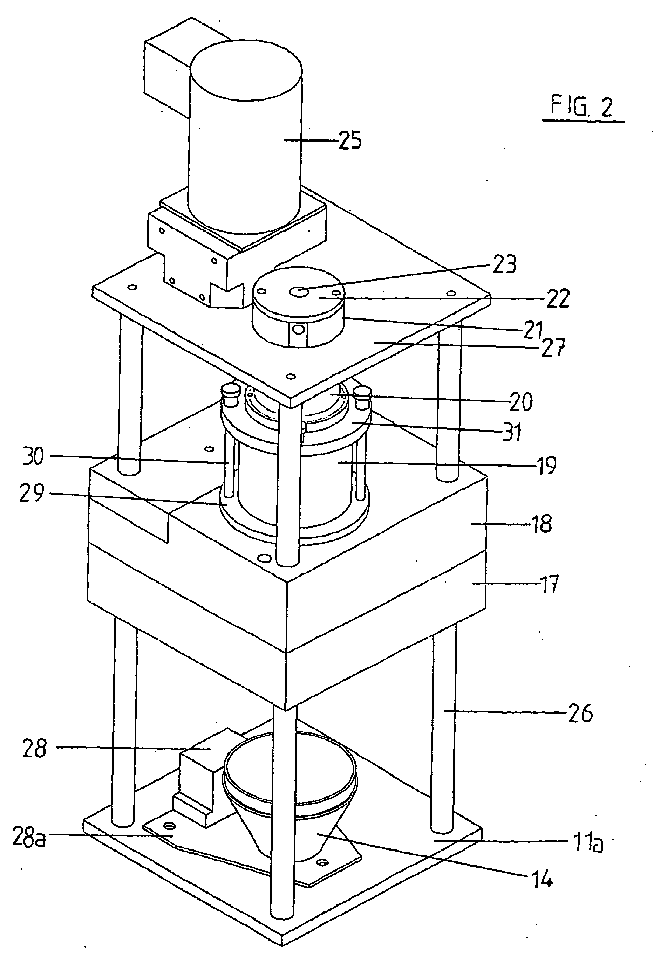

In Transportrichtung an die Eintrittsöffnung 11 b anschließend ist der in den Figuren 2 bis 4 näher dargestellte Hauptteil der erfindungsgemäßen Vorrichtung angeordnet. Dieser Hauptteil weist vier zum Gehäuseboden 11 a senkrecht angeordnete Streben auf, an welchen die übrigen Teile des Hauptteils im Wesentlichen befestigt sind.

In die Eintrittsöffnung 11 b in dem Gehäuseboden 11 a ist die Spitze eines Trichters 4 mit Spiel eingesetzt. Der Trichter 14 selbst ist an einer Platte 28a befestigt, die über Schwingungen erlaubende Elemente an dem Gehäuseboden 11a befestigt ist. Auf der Oberseite der Platte 28a ist ein Vibrator 28 angeordnet, welcher die Platte 28a und den Trichter 14 in Schwingungen versetzen kann.

In der Öffnung 13 an der Spitze des Trichters 14 ist eine ringförmige Bürste (nicht dargestellt) eingesetzt.

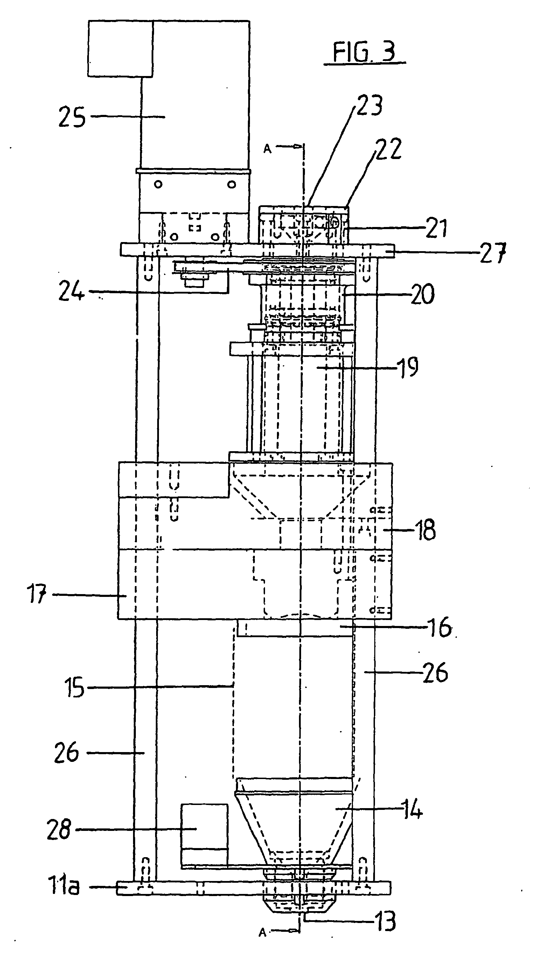

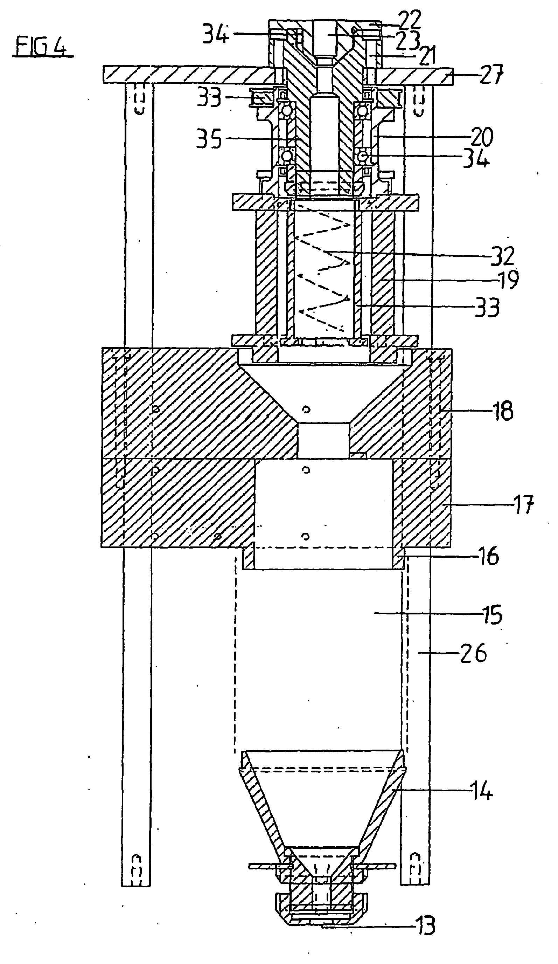

An dem weiten Ende des Trichters 14 schließt sich - in Fig. 3 und 4 angedeutet - eine Manschette 15 an, die ebenfalls mit einem auf den Streben 26 verschiebbaren Schlitten 17 über eine Flanschfläche 16 verbunden ist. Der Schlitten 17 weist eine an die Flansch 16 bzw. die Manschette 15 anschließende Durchgangsbohrung auf.

An den fahrbaren Schlitten schließt sich oberhalb, ebenfalls auf den Streben 26 ruhend, ein Halteteil 18 verfahrbar an. Das Halteteil 18 hat ebenfalls eine zum Teil konische Durchgangsbohrung, die die Durchgangsbohrung in dem verfahrbaren Schlitten 17 verlängert.

In das obere Ende dieser Durchgangsbohrung des Halteteils 18 ist ein unteres Endes eines drehbaren Käfigs 29, 30, 31 eingesetzt, der aus einem unteren Ring 29 einem oberen Ring 31 und die beiden Ringe 29 und 31 verbindenden Streben 30 gebildet wird. Der untere Ring 29 ragt mit einem umlaufenden Bund in das obere Ende der Durchgangsbohrung des Halteteils 18 hinein und ist gegenüber dem Halteteil 18 abgedichtet. Das Halteteil 18 kann in einer Ausführung ebenfalls auf den Streben 26 verfahrbar sein, um einen Wechsel eines in dem Käfig 28, 30, 31 angeordneten Filterelements 19 zu ermöglichen.

Der Käfig 29, 30, 31 nimmt das Filterelement 19 auf. Dieses Filterelement 19 ist für Partikel undurchdringlich, lässt jedoch Luft oder andere Gase hindurchtreten. Das Filterelement 19 hat einen im Wesentlichen kreisförmigen Querschnitt, die Seitenwand des Filterelements 19 ist jedoch vorzugsweise mehrfach gefaltet, so dass sich eine in etwa sternförmige Querschnittsform des Filterelements 19 ergibt.

Innerhalb des Filterelements 19 ist ein Rohrstutzen 33 angeordnet, der mit einem Ende an dem oberen Ring 31 befestigt ist und bis in den Bereich des unteren Rings 29 erstreckt. Zwischen dem unteren Ende des Rohrstutzens 33 und dem Innendurchmesser des unteren Rings 29 verbleibt dabei jedoch ein geringer Spalt.

Der obere Ring 31 ist mit einer Hülse 20 fest verbunden, die Hülse 20 ist über zwei Kugellager 34 an einem Lagerstutzen 35 drehbar gelagert. Der Lagerstutzen 35 ist in einer Öffnung einer Abschlussplatte 27 angebracht, die an den oberen Enden der Streben 26 befestigt ist. Der Lagerstutzen 35 weist eine mit mehreren Absätzen versehenen und sich in einen mittleren Bereich verjüngende Durchgangsbohrung auf. Das untere Ende des Lagerstutzens 35 reicht bis an den oberen Ring 31 heran.

Die Durchgangsbohrung des Lagerstutzens 35 erweitert sich an ihrem oberen Ende konisch. In diese konische Erweiterung ist ein komplementär geformter Konus 22 eingesetzt wobei zwischen dem Konus 22 und der konischen Erweiterung der Durchgangsbohrung des Lagerstutzens 35 ein Ringspalt verbleibt, welcher mit einem Druckluftanschluss (nicht dargestellt) verbunden ist und eine Ringdüse bildet. Der Konus 22 weißt eine zentrale Durchgangsbohrung auf, welche die Durchgangsbohrung des Lagerstutzens 35 ab ihrem verjüngten Bereich fortsetzt.

Auf der Oberseite der Abschlussplatte 27 ist ein Elektromotor 25 befestigt, dessen Welle eine Bohrung in der Abschlussplatte durchgreift und über einen Riemen 24 einen Antriebsring 33 antreiben kann, der fest mit der Hülse 20 verbunden ist. Über den Elektromotor 25 kann somit die Hülse 20 und alle damit fest verbundenen Teile wie dem Käfig 29, 30, 31, dem Filterelement 29, dem Rohrstutzen 33 und in dem Rohrstutzen angeordneten Spiralbürste 32 angetrieben werden die Hülse 20, der Käfig 29, 30, 31, das Filterelement 19, das Halteteil 18, der Schlitten 17 und die Abschlussplatte 27 bilden im Übrigen zusammen ein inneres Gehäuse, auf welches auch in den Ansprüchen Bezug genommen ist.

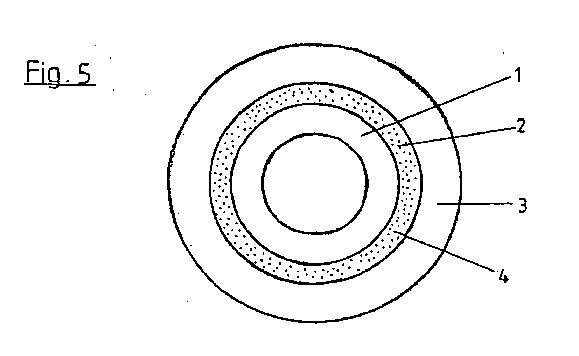

Der so genannte Innenschlauch wird über die Eintrittsöffnung 11b im Gehäuseboden 11a des äußeren Gehäuses 11 in die Spitze 13 des Trichters 14 geführt. Davor ist die Oberfläche des Innenschlauchs (Bzz. 1, Fig. 5) mittels einer Heizung soweit erhitzt worden, dass die Oberfläche plastisch verformbar ist.

In dem Trichter 14 sind die Partikel eingefüllt, mit welchen der herzustellende Schlauch dann eingefärbt ist. Zum Einfüllen der Partikel kann der Schlitten 17 nach unten gefahren werden, wodurch von oben durch die Durchtrittsöffnung des Schlittens 17 und die Manschette 16 hindurch die Partikel in den Trichter 14 eingefüllt werden können.

Der aufgeheizte Innenschlauch 1 nimmt in dem Trichter 14 mit seiner äußeren Oberfläche die Partikel an und führt diese auf seinem Weg nach oben mit sich. Der Innenschlauch 1 mit den anhaftenden Partikeln wird durch die Manschette 15, durch den Schlitten 17 zu dem Halteteil 18 geführt. Von dem Halteteil 18 wird der lnnenschlauch durch die rotierende Spiralbürste 32 weiter nach oben durch den Lagerstutzen 35 hindurchgeführt. Insbesondere im mittleren sich verjüngenden Bereich des Lagerstutzens 35 wird der Innenschlauch mit den anhaftenden Partikeln, von der aus der Ringdüse austretenden Druckluft, angestrahlt.

Mit den anhaftenden Partikeln tritt aus dem Konus über eine Austrittsöffnung 23 aus und wird von dort der Umlenkrolle 12b zugeführt.

Nach dem Aufbringen der Partikel vibrierenden Trichter 14 erfährt die Oberfläche mit den anhaftenden Partikeln eine zweistufige mechanische Nachbehandlung. So wird zum einen durch die rotierende Spiralbürste 32 auf die Oberfläche mit den anhaftenden Partikeln eingewirkt. Die Partikel werden dadurch relativ zur Oberfläche des Innenschlauchs ausgerichtet. Gegebenenfalls zuviel aufgetragene Partikel werden entfernt. Zum anderen wird in der Ringdüse durch die aus der Ringdüse austretende Druckluft auf den Innenschlauch mit den anhaftenden Partikeln eingewirkt. Lose oder zu lose an der Oberfläche des Innenschlauchs anhaftende Partikel werden durch die Druckluft weggeblasen und gegen die Transportrichtung des Schlauchs nach unten befördert. Die Druckluft führt die Partikel nach unten mit.

Die Partikel werden durch die Druckluft nach unten beschleunigt, um dem Trichter 14 zugeführt zu werden, so dass sie einer weiteren Verarbeitung zur Verfügung stehen. Damit innerhalb der Vorrichtung 1 kein zu hoher Überdruck entsteht, muss die zugeführte Druckluft aus dem Inneren des äußeren Gehäuses 11 abgeführt werden. Dazu dient der zwischen dem Rohrstutzen 33 und dem unteren Ring 29 verbleibende Spalt. Die Druckluft kann an diesem Spalt um ca. 180° nach oben umgelenkt werden, wobei die mitgeführten Partikel auf Grund ihrer Massenträgheit weiter nach unten fliegen. Die Druckluft kommt dann auf die Überdruckseite des Filterelements 19 und wird durch das Filterelement 19 gedrückt. Eventuell noch mitgeführte Partikel werden in dem Filter 19 festgehalten.

Ein mittels der Vorrichtung gemäß der Fig. 1 bis 4 mit Partikel versehener Innenschlauch 1 wird anschließend mit einer äußeren Schicht 3, dem so genannten Außenschlauch 3 versehen. Zwischen diesem Außenschlauch 3 und dem Innenschlauch 1 sind die Partikel 2 in einer weiteren, mittleren Schicht angeordnet, wie es in Fig. 5 dargestellt ist. Der Innenschlauch 1 kann zur Erhöhung er Druckfestigkeit eine Gewebeeinlage haben.

## Patentansprüche

1. Verfahren zum Herstellen eines Schlauches, insbesondere eines Brauseschlauches, aus mehreren Schichten (1, 3) mit folgenden Schritten:
- zunächst werden auf eine äußere Oberfläche eines Innenschlauches (1), der eine innere Schicht (1) des Brauseschlauches bildet, Partikel aufgetragen,
- dann wird mechanisch auf die an dem Innenschlauch anhaftenden Partikel (2) eingewirkt,
- dann wird eine äußere Schicht (3) aufgetragen,
**dadurch gekennzeichnet,**
**dass** durch Bürsten (32), Rollen, Lappen oder dergleichen mechanisch auf die Partikel eingewirkt wird.

2. Verfahren nach Anspruch 1, **dadurch gekennzeichnet, dass** die Oberfläche des Innenschlauchs (1) vor dem Auftragen der Partikel mit einer Heizung aufgeheizt wird.

3. Verfahren nach Anspruch 1, **dadurch gekennzeichnet, dass** auf die Oberfläche des Innenschlauchs (1) vor dem Auftragen der Partikel ein Klebstoff, Lack oder ähnliches aufgetragen wird.

4. Verfahren nach Anspruch 1 oder 2, **dadurch gekennzeichnet, dass** die Oberfläche auf eine für das Material des Innenschlauchs (1) typische Temperatur erhitzt wird.

5. Verfahren nach einem der Ansprüche 1 bis 4, **dadurch gekennzeichnet, dass** der Innenschlauch (1) zum Auftragen der Partikel durch ein Bad mit den Partikeln gezogen wird.

6. Verfahren nach einem der Ansprüche 1 bis 5, **dadurch gekennzeichnet, dass** durch ein Druckmedium zum Beispiel Druckluft mechanisch auf die Partikel eingewirkt wird.

7. Verfahren nach einem der Ansprüche 1 bis 6, **dadurch gekennzeichnet, dass** durch die mechanische Einwirkung nicht unmittelbar an dem Innenschlauch (1) anhaftende Partikel zum Teil entfernt werden.

8. Verfahren nach einem der Ansprüche 1 bis 7, **dadurch gekennzeichnet, dass** die mechanische Einwirkung die Partikel (2) ausrichtet oder glättet.

9. Verfahren nach einem der Ansprüche 1 bis 8, **dadurch gekennzeichnet, dass** nach dem Erhitzen der Oberfläche des Innenschlauchs (1) und vor oder nach dem Auftragen der Partikel mit einem oder mehreren Stempeln Vertiefungen in die Oberfläche des Innenschlauchs eingedrückt werden.

10. Vorrichtung (10) zum Herstellen eines Schlauches, insbesondere eines Brauseschlauches, insbesondere zum Durchführen eines Verfahrens nach einem der Ansprüche 1 bis 9,
- mit einem Behälter (14) für ein Bad aus Partikeln,
- wobei der Behälter (14) eine Eintrittsöffnung (13) für einen Innenschlauch und eine Austrittsöffnung für den mit den Partikeln versehenen Innenschlauch (1) aufweist, wobei
die Vorrichtung (10) Mittel zur mechanischen Einwirkung auf die an dem Innenschlauch (1) anhaftenden Partikel aufweist, **dadurch gekennzeichnet,**
**dass** die Mittel zur mechanischen Einwirkung Bürsten (32), Rollen, Lappen und/oder dergleichen umfassen.

11. Vorrichtung nach Anspruch 10, **dadurch gekennzeichnet, dass** die Mittel zur mechanischen Einwirkung Düsen für ein Druckmedium, insbesondere Druckluft umfassen.

12. Vorrichtung nach Anspruch 11, **dadurch gekennzeichnet, dass** die Mittel zur mechanischen Einwirkung zum Teil aus Textilien, Leder, Schaumstoff, weichen Kunststoffmaterialien, Elastomeren, Borsten oder ähnlichem hergestellt sind.

13. Vorrichtung nach einem der Ansprüche 10 bis 12, **dadurch gekennzeichnet**, das ein Mittel zur mechanischen Einwirkung eine Spiralbürste (32) ist, welche mittels eines Antriebs um ihre Längsachse drehbar ist.

14. Vorrichtung nach Anspruch 13, **dadurch gekennzeichnet, dass** die Düsen in Transportrichtung des mit den Partikeln versehenen Innenschlauchs (1) hinter der drehbaren Bürste (32) angeordnet sind.

15. Vorrichtung nach einem der Ansprüche 10 bis 14, **dadurch gekennzeichnet, dass** die Mittel zur mechanischen Einwirkung in einem Gehäuse (20, 29, 30, 31, 19, 18, 17) angeordnet sind.

16. Vorrichtung nach Anspruch 15, **dadurch gekennzeichnet, dass** das Gehäuse (20, 29, 30, 31, 19, 18, 17) eine Eintrittsöffnung und eine Austrittsöffnung für den mit den Partikeln beschichteten Schlauch hat.

17. Vorrichtung nach Anspruch 16, **dadurch gekennzeichnet, dass** die Eintrittsöffnung des Gehäuses (20, 29, 30, 31, 19, 18, 17) zumindest mittelbar mit der Austrittsöffnung des Behälters (14) verbunden ist.

18. Vorrichtung nach einem der Ansprüche 15 bis 17, **dadurch gekennzeichnet, dass** in eine Wand des Gehäuses (20, 29, 30, 31, 19, 18, 17) ein Filter (19) eingesetzt ist.

19. Vorrichtung nach einem der Ansprüche 10 bis 18, **dadurch gekennzeichnet, dass** der Behälter (14) mit einem Vibrator (28) gekoppelt ist.

20. Vorrichtung nach einem der Ansprüche 10 bis 19, **dadurch gekennzeichnet, dass** der Behälter (14) zumindest in einem Abschnitt trichterförmig ausgebildet ist und eine Spitze des Trichters gegen die Transportrichtung des Schlauchs weist.

21. Vorrichtung nach einem der Ansprüche 10 bis 20, **dadurch gekennzeichnet, dass** die Vorrichtung (10) ein Heizmittel zum Aufheizen des Schlauches umfasst.

22. Schlauch, insbesondere Brauseschlauch, hergestellt nach dem Verfahren nach einem der Ansprüche 1 bis 9, wobei zwischen einer inneren Schicht (1) und einer äußeren Schicht (3) des Schlauchs Partikel angeordnet sind, **dadurch gekennzeichnet, dass** die Partikel plättchenartig ausgebildet sind und die plättchenartig ausgebildeten Partikel im Wesentlichen parallel zur äußeren Oberfläche der inneren Schicht angeordnet sind.

23. Schlauch, insbesondere Brauseschlauch, z. B. nach Anspruch 22 mit einer inneren Schicht, einer äußeren Schicht, **dadurch gekennzeichnet, dass** in einer äußeren Oberfläche der inneren Schicht Vertiefungen vorgesehen sind.

24. Schlauch nach Anspruch 23, **dadurch gekennzeichnet, dass** die Vertiefungen Einprägungen sind.

25. Schlauch nach Anspruch 23 oder 24, **dadurch gekennzeichnet, dass** die Vertiefungen regelmäßig angeordnet sind.

26. Schlauch nach einem der Ansprüche 23 bis 25, **dadurch gekennzeichnet, dass** die Vertiefungen kreisförmig, ringförmig, tropfenförmig, linienförmig, pfeilförmig, kreuzförmig, quadratisch, rechteckig und/oder als Buchstaben und/oder Ziffern ausgebildet sind.

27. Schlauch, insbesondere Brauseschlauch, z. B. nach einem der Ansprüche 22 bis 26, **dadurch gekennzeichnet, dass** der Schlauch einen nicht kreisförmigen Querschnitt hat.

28. Schlauch, nach Anspruch 27, **dadurch gekennzeichnet, dass** der Schlauch einen sternförmigen Querschnitt hat.

29. Schlauch nach Anspruch 28, **dadurch gekennzeichnet, dass** der Schlauch einen ovalen oder eckigen Querschnitt hat.

30. Schlauch, insbesondere Brauseschlauch, nach einem der Ansprüche 22 bis 25, **dadurch gekennzeichnet, dass** die innere und/oder äußere Schicht (1, 3) durch einen Schlauch nach einem der Ansprüche 27 bis 29 gebildet ist.

## Claims

1. Process for producing a hose, in particular a shower hose, from a plurality of layers (1, 3), comprising the following steps:
- firstly, particles are applied to an outer surface of an inner hose (1), which forms an inner layer (1) of the shower hose,
- mechanical action is then exerted on the particles (2) which adhere to the inner hose,
- an outer layer (3) is then applied,
**characterized**
**in that** mechanical action is exerted on the particles by brushes (32), rollers, tabs or the like.

2. Process according to Claim 1, **characterized in that** the surface of the inner hose (1) is heated by a heater before the particles are applied.

3. Process according to Claim 1, **characterized in that** an adhesive, lacquer or similar is applied to the surface of the inner hose (1) before the particles are applied.

4. Process according to Claim 1 or 2, **characterized in that** the surface is heated to a temperature which is typical for the material of the inner hose (1).

5. Process according to one of Claims 1 to 4, **characterized in that** the particles are applied by drawing the inner hose (1) through a bath containing the particles.

6. Process according to one of Claims 1 to 5, **characterized in that** mechanical action is exerted on the particles by a pressure medium, for example compressed air.

7. Process according to one of Claims 1 to 6, **characterized in that** some of the particles which do not adhere directly to the inner hose (1) are removed by the mechanical action.

8. Process according to one of Claims 1 to 7, **characterized in that** the particles (2) are oriented or smoothed by the mechanical action.

9. Process according to one of Claims 1 to 8, **characterized in that** depressions are impressed in the surface of the inner hose by one or more punches after the surface of the inner hose (1) has been heated and before or after the application of the particles.

10. Device (10) for producing a hose, in particular a shower hose, in particular for carrying out a process according to one of Claims 1 to 9,
- having a container (14) for a bath of particles,
- wherein the container (14) has an inlet opening (13) for an inner hose and an outlet opening for the inner hose (1) provided with the particles,
wherein
the device (10) has means for exerting mechanical action on the particles which adhere to the inner hose (1),
**characterized**
**in that** the means for exerting mechanical action comprise brushes (32), rollers, tabs and/or the like.

11. Device according to Claim 10, **characterized in that** the means for exerting mechanical action comprise nozzles for a pressure medium, in particular compressed air.

12. Device according to Claim 11, **characterized in that** the means for exerting mechanical action are produced in part from textiles, leather, foam material, soft plastic materials, elastomers, bristles or similar.

13. Device according to one of Claims 10 to 12, **characterized in that** one means for exerting mechanical action is a helical brush (32), which can be rotated about its longitudinal axis by means of a drive.

14. Device according to Claim 13, **characterized in that** the nozzles are arranged downstream from the rotatable brush (32) in the direction in which the inner hose (1) provided with the particles is transported.

15. Device according to one of Claims 10 to 14, **characterized in that** the means for exerting mechanical action are arranged in a housing (20, 29, 30, 31, 19, 18, 17).

16. Device according to Claim 15, **characterized in that** the housing (20, 29, 30, 31, 19, 18, 17) has an inlet opening and an outlet opening for the hose coated with the particles.

17. Device according to Claim 16, **characterized in that** the inlet opening of the housing (20, 29, 30, 31, 19, 18, 17) is connected at least indirectly to the outlet opening of the container (14).

18. Device according to one of Claims 15 to 17, **characterized in that** a filter (19) is inserted into a wall of the housing (20, 29, 30, 31, 19, 18, 17).

19. Device according to one of Claims 10 to 18, **characterized in that** the container (14) is coupled to a vibrator (28).

20. Device according to one of Claims 10 to 19, **characterized in that** the container (14) has a funnel-shaped design at least in one portion, and a tip of the funnel points counter to the direction in which the hose is transported.

21. Device according to one of Claims 10 to 20, **characterized in that** the device (10) comprises a heating means for heating up the hose.

22. Hose, in particular shower hose, produced by the process according to one of Claims 1 to 9, wherein particles are arranged between an inner layer (1) and an outer layer (3) of the hose, **characterized in that** the particles have a platelet-like form, and the platelet-like particles are arranged substantially parallel to the outer surface of the inner layer.

23. Hose, in particular shower hose, e.g. according to Claim 22, having an inner layer and an outer layer, **characterized in that** depressions are provided in an outer surface of the inner layer.

24. Hose according to Claim 23, **characterized in that** the depressions are punched formations.

25. Hose according to Claim 23 or 24, **characterized in that** the depressions have a regular arrangement.

26. Hose according to one of Claims 23 to 25, **characterized in that** the depressions have a circular, annular, drop-shaped, linear, arrow-shaped, cross-shaped, square or rectangular form and/or are in the form of letters and/or numerals.

27. Hose, in particular shower hose, e.g. according to one of Claims 22 to 26, **characterized in that** the hose has a non-circular cross section.

28. Hose according to Claim 27, **characterized in that** the hose has a star-shaped cross section.

29. Hose according to Claim 28, **characterized in that** the hose has an oval or angular cross section.

30. Hose, in particular shower hose, according to one of Claims 22 to 25, **characterized in that** the inner and/or outer layer (1, 3) is formed by a hose according to one of Claims 27 to 29.

## Revendications

1. Procédé de fabrication d'un tuyau flexible en plusieurs couches (1, 3), en particulier d'un tuyau flexible de douche, le procédé présentant les étapes suivantes :
- tout d'abord, des particules sont appliquées sur une surface extérieure d'un tuyau flexible intérieur (1) qui forment une couche intérieure (1) du tuyau flexible de douche,
- ensuite, on agit mécaniquement sur les particules (2) qui adhèrent sur le tuyau flexible intérieur,
- et on applique ensuite une couche extérieure (3),
**caractérisé en ce que**
on agit mécaniquement sur les particules à l'aide de brosses (32), de rouleaux, de chiffons ou similaires.

2. Procédé selon la revendication 1, **caractérisé en ce que** la surface du tuyau flexible intérieur (1) est chauffée à l'aide d'un dispositif de chauffage avant l'application des particules.

3. Procédé selon la revendication 1, **caractérisé en ce qu'**un adhésif, un vernis ou similaires sont appliqués sur la surface du tuyau flexible intérieur (1) avant l'application des particules.

4. Procédé selon les revendications 1 ou 2, **caractérisé en ce que** la surface est chauffée à une température typique pour le matériau du tuyau flexible intérieur (1).

5. Procédé selon l'une des revendications 1 à 4, **caractérisé en ce que** le tuyau flexible intérieur (1) est tiré à travers un bain présentant les particules pour appliquer les particules.

6. Procédé selon l'une des revendications 1 à 5, **caractérisé en ce que** l'on agit mécaniquement sur les particules à l'aide d'un fluide sous pression, par exemple de l'air comprimé.

7. Procédé selon l'une des revendications 1 à 6, **caractérisé en ce que** la partie des particules qui n'adhère pas directement sur le tuyau flexible intérieur (1) est enlevée par le traitement mécanique.

8. Procédé selon l'une des revendications 1 à 7, **caractérisé en ce que** le traitement mécanique oriente ou lisse les particules (2).

9. Procédé selon l'une des revendications 1 à 8, **caractérisé en ce qu'**après le chauffage de la surface du tuyau flexible intérieur (1) et avant ou après l'application des particules, des creux sont imprimés dans la surface du tuyau flexible intérieur à l'aide d'un ou plusieurs poussoirs.

10. Dispositif (10) de fabrication d'un tuyau flexible, en particulier d'un tuyau flexible pour douche, en particulier en vue de l'exécution d'un procédé selon l'une des revendications 1 à 9, et présentant
- un récipient (14) pour un bain de particules,
- le récipient (14) présentant une ouverture d'entrée (13) pour un tuyau flexible intérieur et une ouverture de sortie pour le tuyau flexible intérieur (1) doté des particules,
le dispositif (10) présentant des moyens qui permettent d'agir mécaniquement sur les particules qui adhèrent au tuyau flexible intérieur (1),
**caractérisé en ce que**
les moyens d'action mécanique comprennent des brosses (32), des rouleaux, des chiffons et/ou similaires.

11. Dispositif selon la revendication 10, **caractérisé en ce que** les moyens de traitement mécanique comprennent des ajutages prévus pour un fluide sous pression, en particulier de l'air comprimé.

12. Dispositif selon la revendication 11, **caractérisé en ce que** les moyens de traitement mécanique sont constitués en partie de textile, de cuir, de mousse, de matière synthétique malléable, d'élastomères, de brosses ou similaires.

13. Dispositif selon l'une des revendications 10 à 12, **caractérisé en ce qu'**un moyen de traitement mécanique est une brosse en spirale (32) qui peut être mise en rotation autour de son axe longitudinal au moyen d'un entraînement.

14. Dispositif selon la revendication 13, **caractérisé en ce que** les tuyères sont disposées en aval des brosses rotatives (32) dans la direction du transport du tuyau flexible intérieur (1) doté des particules.

15. Dispositif selon l'une des revendications 10 à 14, **caractérisé en ce que** les moyens de traitement mécanique sont disposés dans un boîtier (20, 29, 30, 31, 19, 18, 17).

16. Dispositif selon la revendication 15, **caractérisé en ce que** le boîtier (20, 29, 30, 31, 19, 18, 17) présente une ouverture d'entrée et une ouverture de sortie pour le tuyau flexible revêtu des particules.

17. Dispositif selon la revendication 16, **caractérisé en ce que** l'ouverture d'entrée du boîtier (20, 29, 30, 31, 19, 18, 17) est reliée au moins indirectement à l'ouverture de sortie du récipient (14).

18. Dispositif selon l'une des revendications 15 à 17, **caractérisé en ce qu'**un filtre (19) est inséré dans une paroi du boîtier (20, 29, 30, 31, 19, 18, 17).

19. Dispositif selon l'une des revendications 10 à 18, **caractérisé en ce que** le récipient (14) est couplé à un vibreur (28).

20. Dispositif selon l'une des revendications 10 à 19, **caractérisé en ce qu'**au moins une partie du récipient (14) est configurée en entonnoir et **en ce que** la pointe de l'entonnoir est orientée dans le sens opposé au sens de transport du tuyau flexible.

21. Dispositif selon l'une des revendications 9 à 20, **caractérisé en ce que** le dispositif (10) comporte un moyen de chauffage qui permet de chauffer le tuyau flexible.

22. Tuyau flexible, en particulier tuyau flexible pour douche, fabriqué par le procédé selon l'une des revendications 1 à 9, et dans lequel des particules sont disposées entre une couche intérieure (1) et une couche extérieure (3) du tuyau flexible,
**caractérisé en ce que**
les particules ont la forme de plaquettes et les particules en forme de plaquette sont disposées essentiellement en parallèle à la surface extérieure de la couche intérieure.

23. Tuyau flexible, en particulier tuyau flexible pour douche, par exemple selon la revendication 22, présentant une couche intérieure, une couche extérieure et **caractérisé en ce que** des creux sont prévus dans la surface extérieure de la couche intérieure.

24. Tuyau flexible selon la revendication 23, **caractérisé en ce que** les creux sont des gaufrages.

25. Tuyau flexible selon les revendications 23 ou 24, **caractérisé en ce que** les creux sont disposés régulièrement.

26. Tuyau flexible selon l'une des revendications 23 à 25, **caractérisé en ce que** les creux ont la forme de cercles, d'anneaux, de gouttes, de lignes, de flèches, de croix, de carrés, de rectangles et/ou ont la forme de caractères d'écriture et/ou de chiffres.

27. Tuyau flexible, en particulier tuyau flexible pour douche, par exemple selon l'une des revendications 22 à 26, **caractérisé en ce que** le tuyau flexible a une section transversale non circulaire.

28. Tuyau flexible selon la revendication 27, **caractérisé en ce que** le tuyau flexible a une section transversale en forme d'étoile.

29. Tuyau flexible selon la revendication 28, **caractérisé en ce que** le tuyau flexible a une section transversale ovale ou polygonale.

30. Tuyau flexible, en particulier tuyau flexible pour douche, selon l'une des revendications 22 à 25, **caractérisé en ce que** la couche intérieure et/ou la couche extérieure (1, 3) sont formées d'un tuyau flexible selon l'une des revendications 27 à 29.
